# EUROPÄISCHE PATENTSCHRIFT

(11) **EP 1 619 364 B1**
(45) Veröffentlichungstag und Bekanntmachung des Hinweises auf die Patenterteilung: **29.08.2012**
(21) Anmeldenummer: 05405438.2
(22) Anmeldetag: 15.07.2005
(51) Int. Cl.: F01N 13/18, F16F 7/14

(54) **Schwingungsisolator**
Vibration isolator
Antivibrateur

(30) Priorität: 20.07.2004 CH 12212004
(43) Veröffentlichungstag der Anmeldung: 25.01.2006
(73) Patentinhaber: Scambia Industrial Developments AG, 9494 Schaan (LI)
(72) Erfinder: Steenackers, Pieter Delfina, 3001 Heverlee (BE)
(74) Vertreter: Bohest AG

(56) Entgegenhaltungen:
- DE-A1- 2 610 184
- GB-A- 1 043 758
- US-A- 2 267 431
- US-A- 3 746 127
- US-A- 5 690 322

## Beschreibung

Die Erfindung betrifft einen Schwingungsisolator gemäss dem Oberbegriff des unabhängigen Patentanspruchs.

Derartige Schwingungsisolatoren kommen beispielsweise bei Motorfahrzeugen zum Einsatz. Am oberen Ende des Motors eines Kraftfahrzeugs ist ein Auspuffkrümmer befestigt, der mehrere Krümmerrohre (entsprechend der Anzahl von Zylindern) umfasst, die typischerweise im wesentlichen horizontal am Motorblock angeflanscht sind und dann in Richtung nach unten weg gebogen im Motorraum verlaufen. Am unteren Ende des Auspuffkrümmers sind die einzelnen Krümmerrohre zusammengeführt. Je nach Ausführungsart kann direkt an den Auspuffkrümmer anschliessend ein Abgaskatalysator vorgesehen sein, der mit dem Auspuffkrümmer fest verbunden ist, beispielsweise durch eine Flanschverbindung. An den Auspuffkrümmer bzw. den Abgaskatalysator schliesst sich dann das Auspuffsystem (Schalldämpfer, Rohre) an, bei welchem das Auspuffrohr zunächst wieder in die horizontale Richtung umgebogen verläuft und dann am Unterboden des Fahrzeugs entlang geführt ist.

Beim Betrieb eines Motorfahrzeugs entstehen im Motor zum Teil sehr erhebliche Schwingungen. Diese Schwingungen sollen nach Möglichkeit nicht bzw. so gering wie möglich auf das Auspuffsystem übertragen werden, weshalb in der Literatur bereits Schwingungsisolatoren vorgeschlagen worden sind.

Ein solcher Schwingungsisolator ist beispielsweise in der JP-A-2000/297638 beschrieben. Dort ist am unteren Ende des Auspuffkrümmers ein Abgaskatalysator angeflanscht. Eine L-förmige Platte ist mit ihrem Schenkel am Motorblock befestigt, während am vorspringenden Fuss der L-förmigen Platte der Abgaskatalysator mit Hilfe einer Schrauben-Mutter-Verbindung befestigt ist. Da in diesem Bereich noch sehr hohe Temperaturen herrschen, dehnen sich nach einem Kaltstart der Auspuffkrümmer und ggf. das Gehäuse des Abgaskatalysators bis zum Erreichen der Betriebstemperatur in Richtung nach unten hin aus. Diese thermische Ausdehnung nach unten hin wird durch eine um die Schraube herum angeordnete Gleitbuchse ermöglicht, die durch den Fuss der L-förmigen Platte hindurch geführt ist.

Andere Typen von Schwingungsisolatoren arbeiten mit zwei Montageplatten, von denen die erste Montageplatte beispielsweise am Motorblock und die zweite Montageplatte beispielsweise am Auspuffkrümmer bzw. am Abgaskatalysator befestigt ist. Die Montageplatten sind mit Hilfe von Drahtseilstücken miteinander verbunden. Die Drahtseilstücke verlaufen zwischen den Montageplatten schlaufenförmig, d.h. sie treten aus den Seitenflächen der ersten Montageplatte aus, sind schlaufenförmig zur zweiten Montageplatte hingeführt und treten in eine Seitenfläche der zweiten Montageplatte ein, die senkrecht zu der Seitenfläche der ersten Montageplatte steht, aus denen die Drahtseilstücke austreten. Die Enden der Drahtseilstücke sind mit der jeweiligen Montageplatte verbunden. Derartige Schwingungsisolatoren sind beispielsweise aus JP-A-2001/290389 bzw. aus EP-A-1 138 974 bekannt.

Aufhängungen für Komponenten von Auspuffsystemen sind aus US 3,746,127 und aus US 2,267,431 bekannt. Diese Aufhängungen umfassen insbesondere auch Drahtseilstücke, deren Enden jeweils in eine Hülse eingepresst sein können, die dann mit einer Montageplatte verbunden ist. Allerdings müssen die Drahtseilstücke in axialer Richtung eine nicht unerhebliche Flexibilität aufweisen, da sie in der Lage sein müssen, Schwingungen des Auspuffsystems aufzunehmen, die im Fahrbetrieb auftreten, z.B. beim Fahren über eine Bodenwelle. Eine sehr hohe Steifigkeit des Drahtseilstücks in axialer Richtung ist daher unerwünscht.

Ein Schwingungsabsorber bzw. Schockabsorber ohne Angabe eines besonderen Verwendungszwecks ist aus der US 5,690,322 bekannt. Der dort beschriebene Schwingungs- bzw. Schockabsorber umfasst zwar ebenfalls ein Drahtseilstück, dessen Enden in eine Hülse eingepresst sein können. Allerdings weist das Drahtseilstück eine Ausbauchung auf, um eine genügende Flexibilität in axialer Richtung aufzuweisen, damit es bei einer entsprechenden Schwingung in axialer Richtung zusammen gedrückt und auseinander gezogen werden kann.

Aufhängungen für Auspuffsysteme mit Drahtseilstücken müssen also stets eine nicht unerhebliche Flexibilität in axialer Richtung aufweisen und kommen daher für eine Verwendung zwischen dem Motorblock eines Motorfahrzeugs und dem Auspuffkrümmer bzw. Abgaskatalysator nicht in Betracht. Andererseits ist es so, dass die vorbeschriebenen Lösungen, die bisher als Schwingungsisolator zwischen dem Motorblock und dem Auspuffkrümmer bzw. dem Abgaskatalysator verwendet werden und Drahtseilstücke verwenden, allesamt sowohl konstruktiv vergleichsweise aufwändig sind wie auch in der Herstellung. Es ist daher eine Aufgabe der Erfindung, einen konstruktiv vergleichsweise einfachen und von der Herstellungsseite her wenig aufwändigen Schwingungsisolator vorzuschlagen, der zwischen dem Motorblock eines Motorfahrzeugs und dem Auspuffkrümmer bzw. dem Abgaskatalysator verwendet werden kann, der also einerseits eine hohe Steifigkeit in der Hauptschwingungsrichtung von Motorblock und Auspuffkrümmer relativ zueinander aufweist, der jedoch andererseits eine thermische Ausdehnungen des Auspuffkrümmers erlaubt und einfach zu montieren ist. Diese Aufgabe wird durch den erfindungsgemässen Schwingungsisolator, wie er durch die Merkmale des unabhängigen Patentanspruchs 7 charakterisiert ist, gelöst. Vorteilhafte Weiterbildungen des erfindungsgemässen Schwingungsisolators sind Gegenstand der zugehörigen abhängigen Patentansprüche. Ein weiterer Aspekt der Erfindung betrifft die Verwendung eines Schwingungsisolators zur Befestigung am Motorblock eines Motorfahrzeugs sowie an dessen Auspuffkrümmer bzw. an einem mit dem Auspuffkrümmer fest verbundenen Abgaskatalysator, wie sie durch die Merkmale des unabhängigen Patentanspruchs 1 charakterisiert ist. Vorteilhafte Varianten der Verwendung sind Gegenstand der zugehörigen abhängigen Patentansprüche.

Insbesondere zeichnet sich der erfindungsgemässe Schwingungsisolator dadurch aus, dass das Drahtseilstück mit den beiden Montageplatten derart verbunden ist, dass es sich geradlinig zwischen den beiden Montageplatten erstreckt. Ein derartiger Schwingungsisolator ist sowohl konstruktiv vergleichsweise einfach als auch von der Herstellungsseite her wenig aufwändig, und er lässt thermische Ausdehnungen des Auspuffkrümmers zu. Von der Funktionsweise kann man sich den Schwingungsisolator so vorstellen, dass die Eigenfrequenz des Isolators in Richtung des geradlinigen Drahtseilstücks so hoch ist, dass sie oberhalb der Frequenzen der Schwingungen liegt, die beim Betrieb vom Motorblock erzeugt werden, sodass allfällige vom Motorblock auf den Auspuffkrümmer bzw. den Abgaskatalysator übertragene Schwingungen in axialer Richtung des Drahtseilstücks eine hohe Dämpfung erfahren, und somit in axialer Richtung des Drahtseilstücks nicht auf das Auspuffsystem übertragen werden. Gleichzeitig lässt der Isolator aber Auslenkungen in einer zur axialen Richtung des Drahtseilstücks senkrechten Ebene zu, sodass thermische Ausdehnungen des Auspuffkrümmers durchaus möglich sind. Das Verhältnis von freier Länge zu Durchmesser des Drahtseilstücks bzw. der Drahtseilstücke ist kleiner als fünfzehn, was den materiellen Aufwand des Schwingungsisolators weiter reduziert und eine hohe Schwingungsdämpfung in axialer Richtung ermöglicht.

Der Durchmesser des Drahtseilstücks kann bis zu etwa 30 mm betragen, und beträgt beispielsweise etwa 6 mm.

Bei einem Ausführungsbeispiel des erfindungsgemässen Schwingungsisolators ist mindestens ein weiteres Drahtseilstück vorgesehen. Dieses weitere Drahtseilstück ist mit der ersten Montageplatte und der zweiten Montageplatte oder mit der ersten Montageplatte und einer dritten Montagplatte derart verbunden, dass es sich geradlinig zwischen den jeweiligen Montageplatten erstreckt. Solche Schwingungsisolatoren sind insbesondere dann vorteilhaft, wenn eine Befestigung für die Montageplatte am Auspuffkrümmer bzw. am Abgaskatalysator aufgrund der Gegebenheiten nur stark seitlich von der Mittellängsachse möglich ist. In diesem Falle kann die Schwingungsdämpfung durch das weitere Drahtseilstück und ggf. durch die dritte Montageplatte noch verbessert werden.

Bei einem Ausführungsbeispiel des erfindungsgemässen Drahtseilstücks bzw. der Drahtseilstücke sind die Enden der jeweils fest mit einer Hülse verbunden. Die eine Hülse ist dann mit der ersten Montageplatte und die andere Hülse mit der zweiten bzw. mit der dritten Montageplatte kraftschlüssig und/oder formschlüssig verbunden. Diese konstruktive Variante erlaubt eine wenig aufwändige Herstellung des erfindungsgemässen Schwingungsisolators. Insbesondere kann dabei die Hülse auf das jeweilige Ende des jeweiligen Drahtseilstücks aufgepresst sein.

Wie bereits erwähnt, besteht eine besonders bedeutende Verwendung eines solchen Schwingungsisolators in der Befestigung am Motorblock eines Motorfahrzeugs einerseits und am Auspuffkrümmer bzw. an einem mit dem Auspuffkrümmer fest verbundenen Abgaskatalysator andererseits. Die vom Motorblock im Betrieb erzeugten Schwingungen in axialer Richtung des geradlinigen Drahtseilstücks können auf diese Weise eine hohe Dämpfung erfahren, wodurch eine Übertragung der (axialen) Schwingungen in dieser Richtung auf nachfolgende Elemente, beispielsweise auf Elemente des Auspuffsystems, zuverlässig verhindert werden kann.

Weitere vorteilhafte Aspekte der Erfindung ergeben sich aus der nachfolgenden Beschreibung mit Hilfe der Zeichnung. Es zeigen:
- Fig. 1: ein erstes Ausführungsbeispiel eines erfindungsgemässen Schwingungsisolators in perspektivischer Darstellung,
- Fig. 2: eine Aufsicht von schräg oben auf das erste Ausführungsbeispiel des Schwingungsisolators aus Fig. 1,
- Fig. 3: eine Ansicht des ersten Ausführungsbeispiels des erfindungsgemässen Schwingungsisolators aus Fig. 1 von der Seite,
- Fig. 4: eine Ansicht von vorne eines zweiten Ausführungsbeispiels eines erfindungsgemässen Schwingungsisolators,
- Fig. 5: eine Aufsicht auf das zweite Ausführungsbeispiel des Schwingungsisolators aus Fig. 4,
- Fig. 6: ein Längsschnitt durch ein Drahtseilstück des erfindungsgemässen Schwingungsisolators mit Hülsen an beiden Enden,
- Fig. 7: ein Ausführungsbeispiel einer Montageplatte zur Befestigung an einem Abgaskatalysator bei einem dritten Ausführungsbeispiel des erfindungsgemässen Schwingungsisolators
- Fig. 8: einen Auspuffkrümmer mit daran anschliessendem Abgaskatalysator und einem erfindungsgemässen Schwingungsisolator mit einer Montageplatte gemäss Fig. 7 in Seitenansicht
- Fig. 9: eine Frontansicht des Auspuffkrümmers und Abgaskatalysators aus Fig. 8 mit dem erfindungsgemässen Schwingungsisolator
- Fig. 10: ein weiteres Ausführungsbeispiel eines erfindungsgemässen Schwingungsisolators
und
- Fig. 11: eine schematische Prinzipdarstellung eines Motorblocks mit Auspuffkrümmer und Auspuffsystem.

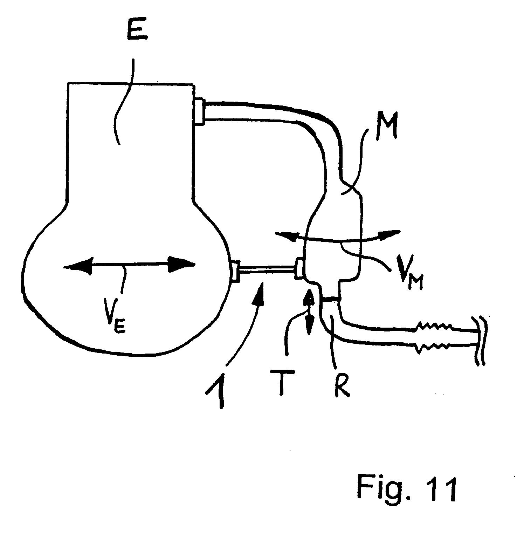

Für eine grundsätzliche Erläuterung wird zunächst auf die schematische Darstellung in Fig. 11 Bezug genommen. Dort erkennt man den Motorblock E eines Motorfahrzeugs sowie einen mit diesem verbundenen Auspuffkrümmer M (hier könnte auch ein fest mit dem Auspuffkrümmer M verbundener Abgaskatalysator dargestellt sein). An den Auslass des Auspuffkrümmers M schliesst sich das Auspuffsystem an, welches hier durch ein Rohr R angedeutet ist.

Der Motorblock E schwingt im Betrieb im wesentlichen in Richtung der Pfeile V_{E}. Den Auspuffkrümmer M (und ggf. den damit verbundenen Abgaskatalysator) kann man sich als einen Ein-Massen-Schwinger vorstellen, der in Richtung der Pfeile V_{M} schwingen kann. Die erste Eigenfrequenz des Ein-Massen-Schwingers ergibt sich aus der Wurzel des Quotienten aus Steifigkeit und Masse des Ein-Massen-Schwingers. Fällt nun die Anregungsfrequenz, also die Frequenz, mit der der Motorblock E im Betrieb schwingt, mit dieser Eigenfrequenz des Ein-Massen-Schwingers zusammen, so liegt ein Resonanzfall vor, bei dem es zu grossen Relativbewegungen zwischen Auspuffkrümmer M und Motorblock E kommen kann, die zu Schäden am Auspuffkrümmer M führen können.

Um dies zu verhindern wird ein Schwingungsisolator 1 einerseits am Motorblock E, andererseits am Auspuffkrümmer M befestigt. Ausführungsbeispiele für einen solchen Schwingungsisolator werden weiter unten noch genauer beschrieben. Erwähnt werden soll jedoch bereits an dieser Stelle, dass der Schwingungsisolator 1 mindestens ein geradliniges Drahtseilstück aufweist, welches in axialer Richtung eine hohe Steifigkeit aufweist, wodurch die Eigenfrequenz aus dem Hauptbereich der vom Motorblock E im Betrieb erzeugten Frequenzen heraus geschoben wird und somit der Resonanzfall verhindert wird.

Aufgrund der Betriebstemperaturen kann es zu thermischen Ausdehnungen des Auspuffkrümmers M kommen, insbesondere in Richtung der Pfeile T. Ausdehnungen in einer Ebene senkrecht zur axialen Richtung lässt aber das Drahtseilstück ohne weiteres zu, da es in diesen Richtungen nur eine geringere Steifigkeit aufweist. Thermische Ausdehnungen führen somit nicht zu hohen Spannungen und/oder plastischen Verformungen und verhindern somit Schäden durch eine thermomechanische Beanspruchung.

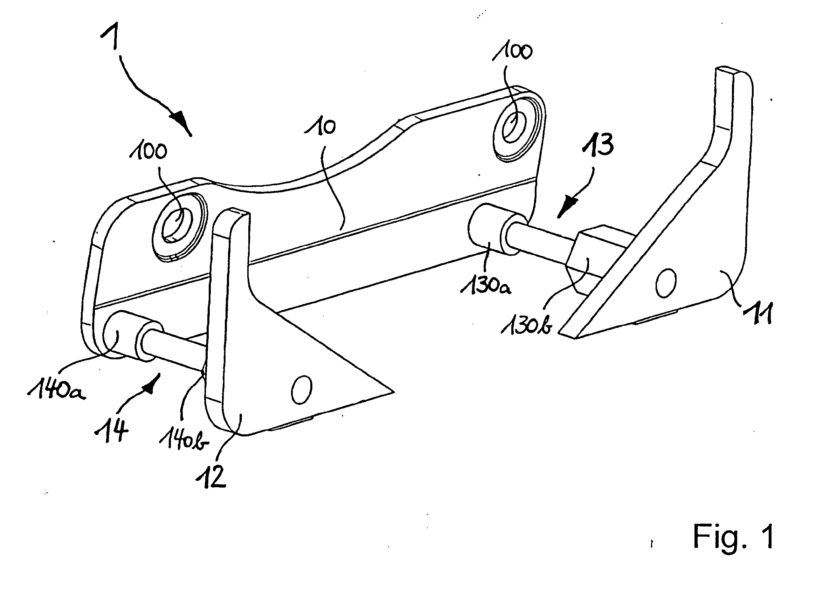

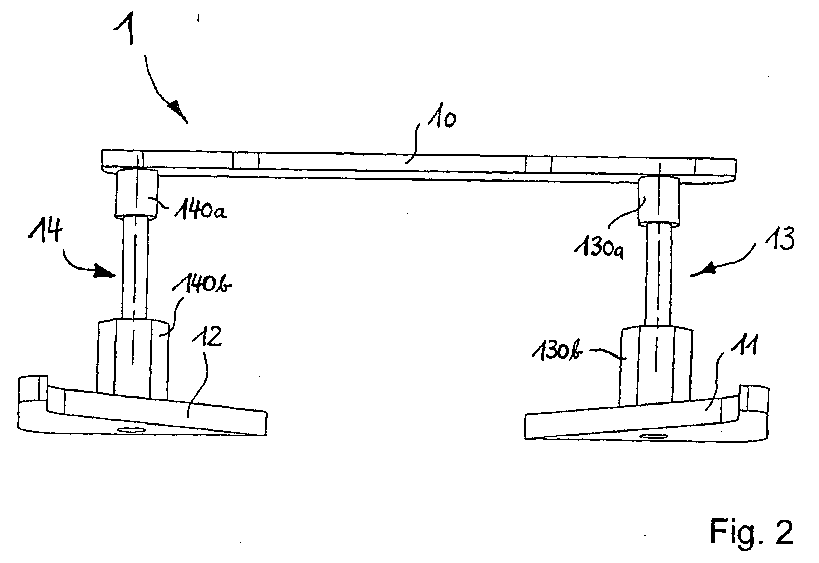

In Fig. 1, Fig. 2 und Fig. 3 erkennt man ein erstes Ausführungsbeispiel des erfindungsgemässen Schwingungsisolators 1. Es umfasst eine erste Montageplatte 10 zur Montage am Motorblock eines Motorfahrzeugs (nicht dargestellt), sowie eine zweite Montageplatte 11 und eine dritte Montageplatte 12, jeweils zur Befestigung am unteren Ende des Auspuffkrümmers oder an einem unmittelbar an den Auspuffkrümmer nachfolgenden und mit diesem verbundenen Abgaskatalysator des Motorfahrzeugs. Die erste Montageplatte 10 kann beispielsweise mit Hilfe von Schrauben am Motorblock befestigt werden, welche durch die Öffnungen 100 hindurch in Gewindebohrungen im Motorblock eingeschraubt werden. Auch die zweite und die dritte Montageplatte 11 bzw. 12 können mit Hilfe einer Schraubverbindung am Ende des Auspuffkrümmers oder am Abgaskatalysator befestigt werden, wozu in der zweiten Montageplatte 11 und in der dritten Montageplatte 12 ebenfalls entsprechende Bohrungen zur Durchführung entsprechender Schrauben vorgesehen sein können (in Fig. 1 bis Fig. 3 nicht dargestellt).

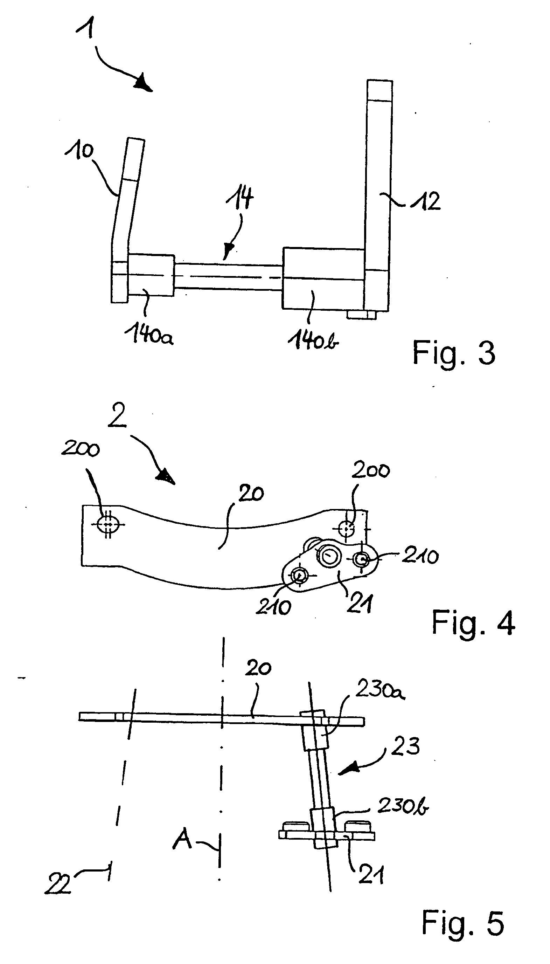

Die erste Montageplatte 10 und die zweite Montageplatte 11 sind durch ein Drahtseilstück 13 miteinander verbunden, während die erste Montageplatte 10 und die dritte Montageplatte 12 durch ein weiteres Drahtseilstück 14 miteinander verbunden sind. Die Drahtseilstücke 13 und 14 erstrecken sich jeweils geradlinig zwischen der ersten Montageplatte 10 und der zweiten Montageplatte 11 bzw. der dritten Montageplatte 12, im hier gezeigten Ausführungsbeispiel stehen sie jeweils senkrecht auf der jeweiligen Montageplatte (siehe Fig. 3).

An den beiden Enden der Drahtseilstücke 13 bzw. 14 sind jeweils Hülsen 130a und 130b bzw. 140a und 104b vorgesehen, wobei die Enden der Drahtseilstücke 13 bzw. 14 jeweils fest mit den Hülsen verbunden sind. Die zylindrischen Hülsen 130a bzw. 140a können jeweils auf die Enden der Drahtseilstücke 13 bzw. 14 aufgepresst sein, ebenso wie die Sechskant-Hülsen 130b bzw. 140b. Die Hülsen 130a und 130b bzw. 140a und 140b können ihrerseits an den jeweiligen Montageplatten durch Schweissen befestigt sein.

Die zweite Montageplatte 11 und die dritte Montageplatte 12 haben bei diesem Ausführungsbeispiel eine im wesentlichen dreieckförmige Gestalt, die geometrische Gestaltung der Montageplatten kann jedoch grundsätzlich an die Gegebenheiten im Motorraum angepasst werden.

In axialer Richtung weisen die Drahtseilstücke 13 und 14 eine hohe Steifigkeit auf, was dazu führt, dass der Schwingungsisolator 1 in dieser axialen Richtung eine hohe Eigenfrequenz aufweist. Das heisst, dass die vom Motor beim Betrieb in axialer Richtung erzeugten Schwingungen eine hohe Dämpfung erfahren, weil ihre Frequenz deutlich unterhalb der Eigenfrequenz des Schwingungsisolators liegt, dieser aber über die Montagplatten 10 bzw. 11 und 12 fest mit dem Motorblock und dem unteren Ende des Auspuffkrümmers bzw. mit dem Abgaskatalysator verbunden sind. Somit können vom Motor in dieser Richtung erzeugte Schwingungen nicht auf nachfolgende Elemente, beispielsweise auf Elemente des Auspuffsystems übertragen werden.

In einer Ebene senkrecht zu der axialen Richtung der Drahtseilstücke 13 bzw. 14 sind die Drahtseilstücke hingegen elastisch. Das ist insbesondere insofern vorteilhaft, als nach einem Kaltstart der Auspuffkrümmer sich beim Erwärmen in dieser Ebene ausdehnt. Dieser thermischen Ausdehnung können jedoch die Drahtseilstücke folgen, ohne ihre Steifigkeit in axialer Richtung nennenswert zu verändern.

In Fig. 3 erkennt man noch, dass die erste Montageplatte 10 leicht abgewinkelt ist. Das ist ohne weiteres möglich und kann beispielsweise durch die Form des Motorblocks, an dem die Montageplatte 10 befestigt werden soll, vorgegeben sein. An denjenigen Stellen, an denen die Hülse 140a (die übrigen Hülsen sind in Fig. 3 nicht zu erkennen) an der Montageplatte 10 befestigt ist, steht jedoch die Hülse 140a bzw. das Drahtseilstück 14 senkrecht auf der Montageplatte 10.

In Fig. 4 und Fig. 5 erkennt man ein zweites Ausführungsbeispiel des erfindungsgemässen Schwingungsisolators 2. Dieses Ausführungsbeispiel umfasst erneut eine erste Montageplatte 20 zur Befestigung am Motorblock, sowie eine zweite Montagplatte 21 und eine dritte Montageplatte (nicht dargestellt). Die erste Montageplatte 20 und die zweite Montageplatte 21 sind durch ein Drahtseilstück 23 miteinander verbunden, welches sich geradlinig zwischen den beiden Montageplatten 20 und 21 erstreckt. Auf die Enden des Drahtseilstücks 23 ist jeweils eine zylindrische Hülse 230a bzw. 230b aufgepresst und diese Hülsen 230a bzw. 230b sind ihrerseits an der jeweiligen Montageplatte 20 bzw. 21 befestigt, beispielsweise verschweisst.

Wie in Fig. 5 zu erkennen ist, erstreckt sich das Drahtseilstück zwar geradlinig zwischen der ersten Montageplatte 20 und der zweiten Montageplatte 21, es steht aber nicht senkrecht auf diesen beiden Montageplatten. Allerdings ist symmetrisch zur Achse A eine dritte Montagplatte und ein weiteres Drahtseilstück (angedeutet durch die gestrichelte Linie 22) angeordnet, sodass Schwingungen in Richtung der Längsachse (parallel zur Achse A) wiederum eine sehr hohe Dämpfung erfahren, ähnlich wie dies auch bei dem Ausführungsbeispiel gemäss Fig. 1 bis Fig. 3 der Fall ist.

Die erste und zweite Montageplatte 20 bzw. 21 (bzw. auch die durch gestrichelte Linie 22 angedeutete Montageplatte) können wiederum durch Schraubverbindungen mit dem Motorblock bzw. dem unteren Ende des Auspuffkrümmers verbunden werden, wozu entsprechende Bohrungen 200 in der ersten Montageplatte bzw. 210 in der zweiten Montageplatte 21 (und nicht dargestellt ebenfalls entsprechende Bohrungen in der dritten Montageplatte) vorgesehen sein können.

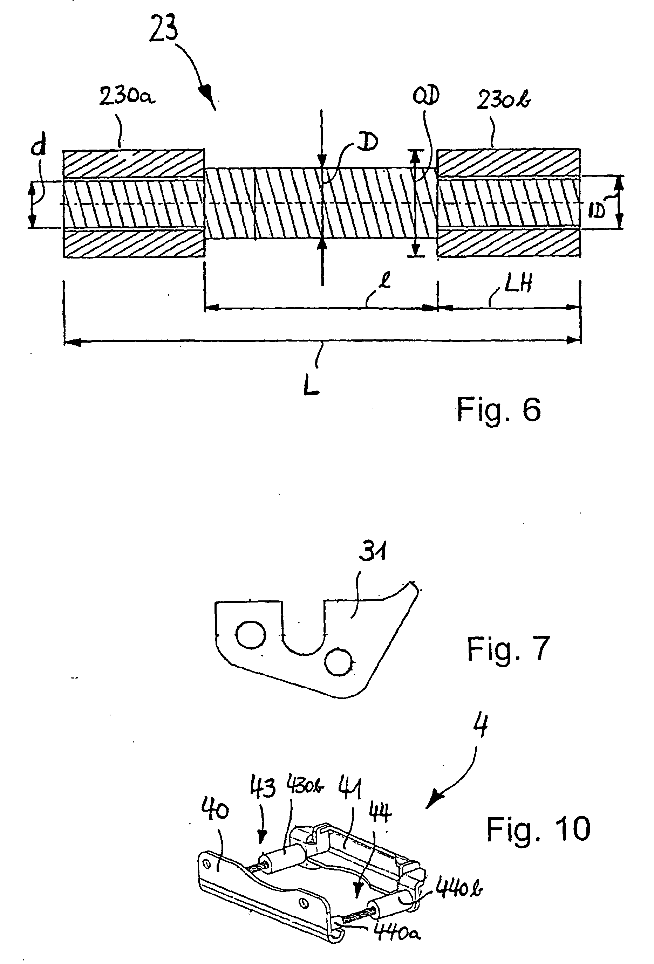

In Fig. 6 ist in einer Schnittdarstellung ein Ausführungsbeispiel des Drahtseilstücks 23 des erfindungsgemässen Schwingungsisolators dargestellt. Auf den beiden Enden des Drahtseilstücks 23 sind zylindrische Hülsen 230a bzw. 230b aufgepresst, wobei in Fig. 6 noch ein kleiner ringförmiger Spalt um die Enden des Drahtseilstücks 23 angedeutet ist, um zu verdeutlichen, dass hier ein Aufpressen der Hülsen 230a bzw. 230b erfolgen kann (Herstellung). Das hier gezeigte Ausführungsbeispiel des Drahtseilstücks 23 (inklusiver der Hülsen 230a und 230b) weist eine Gesamtlänge L auf, die hier beispielsweise 44 mm beträgt. Die freie Länge 1 des Drahtseilstücks 23 beträgt hier 20 mm, während der Durchmesser D des Drahtseilstücks 23 im Bereich seiner freien Länge 1 etwa 6 mm beträgt. Der Durchmesser d der freien Enden des Drahtseilstücks beträgt 4 mm während der Innendurchmesser ID der zylindrischen Hülsen 230a bzw. 230b vor dem Aufpressen etwa 4.6 mm beträgt, sodass die Enden des Drahtseilstücks 23 gut in die Hülsen 230a bzw. 230b eingeführt werden können. Die Länge LH der Hülse 230a bzw. 230b beträgt hier beispielsweise 12 mm, der Aussendurchmesser der Hülsen OD beträgt hier beispielsweise 9.2 mm.

Im allgemeinen ist das Verhältnis von freier Länge 1 des Drahtseilstücks 23 zum Durchmesser D im Bereich der freien Länge 1 des Drahtseilstücks 23 kleiner als fünfzehn, insbesondere kann der Durchmesser des Drahtseilstücks 23 bis zu etwa 30 mm betragen.

Für die Herstellung der Drahtseilstücke können Drähte verschiedensten Durchmessers, Materials und Drahtquerschnitts auf unterschiedliche Weisen miteinander zu einem Drahtseilstück verflochten oder verdrillt werden. Um das Drahtseilstück herum kann eine Schutzummantelung vorgesehen werden (nicht dargestellt) zum Schutz gegen äussere Angriffe (z.B. Korrosion). Die einzelnen Drähte können auch beschichtet sein.

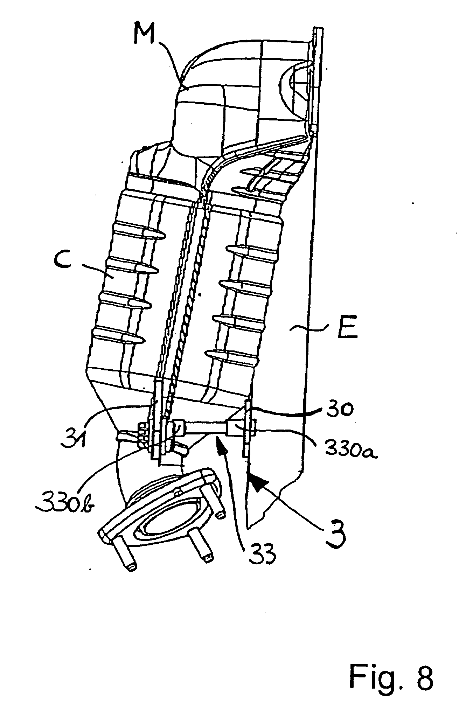

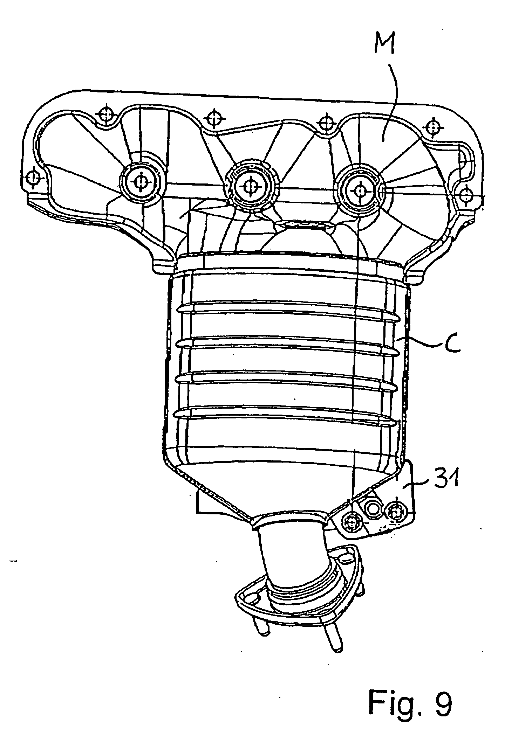

In Fig. 7 erkennt man ein weiteres Ausführungsbeispiel einer Montageplatte 31 eines dritten Ausführungsbeispiels des erfindungsgemässen Schwingungsisolators. Die Montageplatte 31 ist dazu bestimmt, am unteren Ende des Auspuffkrümmers M befestigt zu werden, bzw. wie in Fig. 8 und Fig. 9 gezeigt an einem unmittelbar an den Auspuffkrümmer M anschliessenden Abgaskatalysator C. Am Motorblock E kann dann die andere Montageplatte 30 vorgesehen sein, und das Drahtseilstück 33 erstreckt sich geradlinig zwischen den beiden Montageplatten 30 und 31. Die beiden Montagplatten sind - wie zuvor bereits erläutert, mit Hilfe des Drahtseilstücks 33 miteinander verbunden, wobei auf die Enden des Drahtseilstücks 33 zylindrische Hülsen 330a und 330b aufgepresst sind, die ihrerseits mit der jeweiligen Montageplatte verschweisst sein können. Wie in Fig. 9 zu erkennen ist, können die Montageplatten durch Schraubverbindungen an dem Abgaskatalysator C bzw. an dem Motorblock E befestigt sein. Obwohl in Fig. 8 und Fig. 9 nicht dargestellt kann auf der anderen Seite (in Fig. 9 links von dem Abgaskatalysator C) eine weitere Montageplatte vorgesehen sein, die an dem Abgaskatalysator befestigt ist und die über ein weiteres Drahtseilstück (hier ebenfalls nicht dargestellt) mit der Montageplatte 30 (siehe Fig. 8) verbunden ist.

Schliesslich erkennt man in Fig. 10 ein viertes Ausführungsbeispiel des erfindungsgemässen Schwingungsisolators 4. Dieses Ausführungsbeispiel umfasst eine erste Montageplatte 40 zur Montage am Motorblock sowie eine zweite Montagplatte 41 zur Befestigung am Auspuffkrümmer bzw. an einem unmittelbar nachfolgenden und mit dem Auspuffkrümmer verbundenen Abgaskatalysator. Die beiden Montageplatten 40 und 41 sind mit Hilfe von Drahtseilstücken 43 und 44, auf deren Enden jeweils Hülsen 430a (nicht dargestellt) und 430b sowie 440a und 44b aufgepresst sind. Die Hülsen ihrerseits können mit den jeweiligen Montageplatten durch Verschweissen verbunden sein.

Grundsätzlich kann die Form der Montageplatten an die Gegebenheiten im Motorraum angepasst werden. Die Drahtseilstücke können in ihrer Länge ebenfalls innerhalb der spezifizierten Grenzen an die Gegebenheiten im Motorraum angepasst werden. Sie erstrecken sich zwar stets geradlinig zwischen den Montageplatten, müssen aber nicht notwendigerweise senkrecht auf den Montageplatten stehen (sieh z.B. Ausführungsbeispiel gemäss Fig. 5).

Ausserdem sei erwähnt, dass der geschilderte Anwendungsfall für den erfindungsgemässen Schwingungsisolator zwischen dem Motorblock und dem unteren Ende des Auspuffkrümmers zwar grundsätzlich einen sehr wichtigen Anwendungsfall darstellt. Es ist aber auch denkbar, dass ein derartiger Schwingungsisolator noch anderen Anwendungsgebiete hat, insbesondere ist es z.B. vorstellbar, mit Hilfe des erfindungsgemässen Schwingungsisolators ein Element des Auspuffsystems, z.B. einen Schalldämpfer, am Unterboden bzw. am Rahmen eines Kraftfahrzeugs zu befestigen.

## Patentansprüche

1. Verwendung eines Schwingungsisolators (1;2;3;4) mit einer ersten Montageplatte (10;20;30;40) und mit einer zweiten Montageplatte (11,12;21,22;31;41), sowie mit mindestens einem Drahtseilstück (7.3,14;23;33:43,44), welches sowohl mit der ersten Montageplatte (10;20;30;40) als auch mit der zweiten Montageplatte (11,12;21,22;31;41) verbunden ist, wobei das Drahtseilstück (13,14;23;33,43,44) mit den beiden Montageplatten derart verbunden ist, dass geradlinig zwischen den beiden Montageplaten erstreckt, **dadurch gekennzeichnet, dass** der Schwingungsisdator zur Befestigung am Motorblock eines Motorfahrzeugs sowie an dessen Auspuffkrümmer bzw. an einem mit dem Auspuffkrümmer fest verbundenen Abgaskatalysator verwendet wird, *wobei* das sich *geradlinig* zwischen den *beiden Montageplatten erstreckende* Drahtseilstück (13,14;23;33;43,44) *in axialer* Richtung *eine* hohe Steifigkeit aufweist derart, dass die Eigenfrequenz des Auspuffkrümmers bzw. die Eigenfrequenz von Auspuffkrümmer und *fest* mit *diesem* verbundenen Katalysator aus dem Hauptbereich *der vom Motorblock (E)* im Betrieb erzeugten Schwingungen heraus geschoben *wird.*

2. Verwendung nach Anspruch 1, bei welcher ein Schwingungsisolator verwendet wird, bei dem mindestens ein weiteres Drahtseilstück (14;24;44) vorgesehen ist, welches mit der ersten Montageplatte (10;20;30;40) und mit der zweiten Montageplatte (11;21;31;41) oder welches mit der ersten Montageplatte (10;20) und einer dritten Montagplatte (12:22) derart verbunden ist, dass es sich geradlinig zwischen den jeweiligen Montageplatten erstreckt.

3. Verwendung nach einem der vorangehenden Ansprüche, bei welcher ein Schwingungsisolator verwendet wird, bei dem an den beiden Enden des Drahtseilstücks bzw. der Drahtseilstücke (13,14;23;33;43,44) jeweils eine Hülse (130a,130b,140a,140b:230a,230b:330a,330b;430a,430b,440a,440b) fest mit dem Ende des Drahtseilstücks (13,14;23;33;43,44) verbunden ist und die eine Hülse (130a,140a;230a;330a; 430a,430b) mit der ersten Montageplatte (10; 20; 30; 40) und die andere Hülse (130b,140b;230b;330b;430b,440b) mit der zweiten bzw. mit der dritten Montageplatte kraftschlüssig und/oder formschlüssig verbunden ist.

4. Verwendung nach Anspruch 3, bei welcher ein Schwingungsisolator verwendet wird, bei dem die Hülse auf das jeweilige Ende des jeweiligen Drahtseilstücks (13,14;23;33;43,44) aufgepresst ist.

5. Verwendung nach einem der vorangehenden Ansprüche, bei welcher ein Schwingungsisolator verwendet wird, bei dem das Verhältnis von freier Länge (1) zu Durchmesser (D) des. drahtseilstücks bzw. der Drahtseilstücke kleiner als fünfzehn ist.

6. Verwendung nach Anspruch 5, bei welcher ein Schwingungsisolator verwendet wird, bei dem der Durchmesser (D) des Drahtseilstücks bis zu etwa 30 mm beträgt, beispielsweise etwa 6 mm.

## Claims

1. Use of a vibration isolator (1;2;3;4) having a first mounting plate (10;20;30;40) and having a second mounting plate (11,12;21,22;31;41), as well as having at least one wire cable piece (13,14;23;33;43,44) which is connected with the first mounting plate (10;20;30;40) as well as with the second mounting plate (11,12;21,22;31;41), wherein the wire cable piece (13,14;23;33;43,44) is connected with the two mounting plates in such a way that it extends straight between the two mounting plates, **characterised in that** the vibration isolator is used for fixation to an engine block of a motor vehicle as well as to an exhaust manifold or to an exhaust gas catalytic converter firmly attached to the exhaust manifold, wherein the wire cable piece (13,14;23;33;43,44) extending straight between the two mounting plates has a high stiffness in axial direction such that the natural frequency of the exhaust manifold or the natural frequency of the exhaust gas catalytic converter firmly attached to the exhaust manifold is shifted out of the main range of the vibrations generated by the engine block (E) during operation.

2. Use according to claim 1, wherein a vibration isolator is used having at least one further wire cable piece (14;24;44) which is connected with the first mounting plate (10;20;30;40) and with the second mounting plate (11;21;31;41) or with the first mounting plate (10;20) and a third mounting plate (12;22) such that it extends straight between the respective mounting plates.

3. Use according to any one of the preceding claims, wherein a vibration isolator is used having a sleeve (130a,130b,140a,140b;230a,230b;330a,330b;430a,430b,440a,440b) being firmly connected at each of the both ends of the wire cable piece, and wherein the one sleeve (130a,140a;230a;330a; 430a,430b) is connected with the first mounting plate (10;20;30;40) while the other sleeve (130b,140b;230b;330b; 430b,440b) is force-lockingly or form-lockingly connected with the second or with the third mounting plate.

4. Use according to claim 3, wherein a vibration isolator is used with the sleeve being pressed onto the respective end of the respective wire cable piece (13,14;23;33;43,44).

5. Use according to any one of the preceding claims, wherein a vibration isolator having a ratio of free length (1) to diameter (D) of the wire cable piece or of the wire cable pieces is less than fifteen.

6. Use according to claim 5, wherein a vibration isolator is used with the diameter (D) of the wire cable piece being up to about 30 mm, for example about 6 mm.

## Revendications

1. Utilisation d'un isolateur de vibrations (1 ; 2 ; 3 ; 4) avec une première plaque de montage (10 ; 20 ; 30 ; 40) et une deuxième plaque de montage (11, 12 ; 21, 22 ; 31 ; 41), ainsi qu'avec au moins une pièce de câble métallique (13, 14 ; 23 ; 33 ; 43, 44), qui est raccordée autant à la première plaque de montage (10 ; 20 ; 30 ; 40) qu'à la deuxième plaque de montage (11, 12 ; 21, 22 ; 31 ; 41), dans laquelle la pièce de câble métallique (13, 14 ; 23 ; 33 ; 43, 44) est raccordée aux deux plaques de montage de sorte qu'elle s'étend en ligne droite entre les deux plaques de montage, **caractérisée en ce que** l'isolateur de vibrations est utilisé pour la fixation au bloc moteur d'un véhicule motorisé, ainsi qu'à son collecteur d'échappement ou à un catalyseur de gaz d'échappement solidement raccordé au collecteur d'échappement, dans laquelle la pièce de câble métallique (13,14 ; 23 ; 33 ; 43,44) s'étendant en ligne droite entre les deux plaques de montage présente en direction axiale une rigidité élevée de sorte que la fréquence propre du collecteur d'échappement ou la fréquence propre du collecteur d'échappement et du catalyseur qui lui est solidement raccordé est poussée hors de la plage principale des vibrations générées par le bloc moteur (E) en fonctionnement.

2. Utilisation selon la revendication 1, dans laquelle on utilise un isolateur de vibrations, dans lequel on prévoit au moins une autre pièce de câble métallique (14 ; 24 ; 44), qui est raccordée à la première plaque de montage (10 ; 20 ; 30 ; 40) et à la deuxième plaque de montage (11 ; 21 ; 31 ; 41) ou qui est raccordée à la première plaque de montage (10 ; 20) et à une troisième plaque de montage (12 ; 22) de sorte qu'elle s'étend en ligne droite entre les plaques de montage respectives.

3. Utilisation selon l'une quelconque des revendications précédentes, dans laquelle on utilise un isolateur de vibrations, dans lequel, aux deux extrémités de la pièce de câble métallique ou des pièces de câble métallique (13, 14 ; 23 ; 33 ; 43, 44), respectivement, une douille (130a, 130b, 140a, 140b ; 230a, 230b ;330a, 330b ; 430a, 430b, 440a, 440b) est solidement raccordée à l'extrémité de la pièce de câble métallique (13, 14 ; 23 ; 33 ; 43, 44) et l'une des douilles (130a, 140a ; 230a ; 330a ; 430a, 430b) est raccordée à la première plaque de montage (10 ; 20 ; 30 ; 40) et l'autre douille (130b, 140b ; 230b ; 330b ; 430b, 440b) est raccordée à la deuxième ou à la troisième plaque de montage par adhérence et/ou par adaptation de forme.

4. Utilisation selon la revendication 3, dans laquelle on utilise un isolateur de vibrations, dans lequel la douille est comprimée sur l'extrémité respective de la pièce de câble métallique respective (13, 14 ; 23 ; 33 ; 43, 44).

5. Utilisation selon l'une quelconque des revendications précédentes, dans laquelle on utilise un isolateur de vibrations, dans lequel le rapport de la longueur libre (1) sur le diamètre (D) de la pièce de câble métallique ou des pièces de câble métallique est inférieur à quinze.

6. Utilisation selon la revendication 5, dans laquelle on utilise un isolateur de vibrations, dans lequel le diamètre (D) de la pièce de câble métallique atteint jusqu'à environ 30 mm, par exemple environ 6 mm.
